**Europäisches Patentamt**

**European Patent Office**    (11) Veröffentlichungsnummer: **0 102 064**

**Office européen des brevets**    **B1**

(12)    # EUROPÄISCHE PATENTSCHRIFT

(45) Veröffentlichungstag der Patentschrift:  (51) Int. Cl.⁴: **H 04 M 11/06**
20.07.88

(21) Anmeldenummer: **83106387.8**

(22) Anmeldetag: **25.06.83**

(54) Schaltungsanordnung zum Anschalten eines Modems an eine Fernsprechleitung.

(30) Priorität: **30.06.82 DE 3232240**

(43) Veröffentlichungstag der Anmeldung:
**07.03.84 Patentblatt 84/10**

(45) Bekanntmachung des Hinweises auf die Patenterteilung:
**20.07.88 Patentblatt 88/29**

(84) Benannte Vertragsstaaten:
**AT CH DE LI NL**

(56) Entgegenhaltungen:
**EP-A-0 023 691**
**BE-A-679 955**

(73) Patentinhaber: **Siemens Aktiengesellschaft Berlin und München, Wittelsbacherplatz 2, D-8000 München 2 (DE)**

(72) Erfinder: **Vogeler, Torsten, Dipl.- Ing., Angerlohstrasse 21, D-8000 München 50 (DE)**

## Beschreibung

Die Erfindung bezieht sich auf eine Schaltungsanordnung zum Anschalten eines Modems an eine Fernsprechleitung, die normalerweise mit einem Fernsprechapparat verbunden ist und die nach dem Auftreten eines in einem Endgerät erzeugten Anschaltsignals unter Verwendung eines Relais vom Fernsprechapparat getrennt und mit dem Modem verbunden wird.

Eine Schaltungsanordnung der vorstehend bezeichneten Art ist bereits bekannt (EP-A-23 691; DE-A-2 931 435). Um bei der bekannten Schaltungsanordnung sicherzustellen, daß einerseits auch bei wiederholtem Anschalten des Modems eine Verbindung für eine vorgegebene Zeitdauer unterbrochen wird und daß andererseits das Anschalten nur dann erfolgt, wenn der Fernsprechapparat nicht belegt ist, ist bei der bekannten Schaltungsanordnung ein Zeitglied vorgesehen. An diesem Zeitglied liegen das vom Endgerät erzeugte Anschaltsignal und ein dem Belegungssignal zugeordnetes Steuersignal an; eine vorgegebene Zeitdauer nach dem Auftreten des Anschaltsignals gibt das genannte Zeitglied ein das Relais erregendes Signal ab; das Zeitglied wird indessen durch das Steuersignal gesperrt. Durch diese Schaltungsmaßnahmen ist sichergestellt, daß die vorgegebene Zeitdauer für die Unterbrechung einer Verbindung bei wiederholtem Anschalten im Modem selbst erzeugt wird und damit weder im Endgerät noch vom Benutzer berücksichtigt werden muß. Durch die Sperrung des Zeitgliedes wird im übrigen die Anschaltung des Modems an die Fernsprechleitung verhindert, wenn der Fernsprechapparat belegt ist. Für die Realisierung des erwähnten Zeitgliedes ist bei der bekannten Schaltungsanordnung eine Schaltung vorgesehen, die ein aus einem Kondensator und einem Widerstand gebildetes Integrierglied und eine Schwellwertstufe enthält, welche durch die Spannung am Kondensator des betreffenden Integriergliedes steuerbar ist. Es hat sich nun gezeigt, daß eine derartige Schaltungsanordnung insgesamt relativ teuer wird und zwar insbesondere wegen des Umstands, daß die verwendete Schwellwertstufe als integrierte Schaltung nicht gerade billig ist.

Es ist bereits ein Zeitglied bekannt (BE-A 679 955), welches aus einem Integrierglied, einem Spannungsteiler und aus einer zwei Transistoren umfassenden Selbsthalteschaltung besteht. Bei dem bekannten Zeitglied ist mit der Selbsthalteschaltung ein weiterer Transistor verbunden, in dessen Kollektorkreis ein Relais liegt. Dies bedeutet aber insgesamt einen relativ hohen schaltungstechnischen Aufwand, der für die Realisierung des bekannten Zeitgliedes erforderlich ist.

Der Erfindung liegt die Aufgabe zugrunde, eine Schaltungsanordnung der eingangs betrachteten Art so weiterzubilden, daß insgesamt mit relativ geringem schaltungstechnischen Aufwand geringere Kosten verursacht werden als dies bisher möglich ist.

Gelöst wird die vorstehend aufgezeigte Aufgabe durch eine Schaltungsanordnung der eingangs genannten Art mit folgenden Merkmalen:

a) Es ist eine Überwachungsschaltung vorgesehen, die ein Belegungssignal an das Endgerät abgibt, wenn der Fernsprechapparat belegt ist;

b) es ist ein Zeitglied vorgesehen, dem das vom Endgerät erzeugte Anschaltesignal und ein dem Belegungssignal zugeordnetes Steuersignal zugeführt werden und das eine vorgegebene Zeitdauer nach dem Auftreten des Anschaltesignals ein das Relais erregendes Signal abgibt, während das Auftreten des Steuersignals zur Sperrung des Zeitgliedes führt;

c) das Zeitglied ist durch ein aus der Reihenschaltung eines Widerstandes und eines Kondensators bestehendes Integrierglied und einen Widerstands-Spannungsteiler gebildet, der in Parallelschaltung mit dem Integrierglied an einer Anschaltsignal-Leitung und einer Erdungs-/Rückführungsleitung des Endgerätes liegt;

d) ein Abgriff des Widerstands-Spannungsteilers ist in dem Emitter bzw. der Basis eines Transistors verbunden, dessen Basis bzw. Emitter mit dem Verbindungspunkt des Widerstands und des Kondensators des Integriergliedes verbunden ist und dessen Kollektor und Basis außerdem mit einem weiteren Transistors unter Bildung einer Selbsthalteschaltung verbunden sind;

e) in die Verbindung des Kollektors des weiteren Transitors mit der Basis des genannten einen Transistors ist eine für einen Basisstrom dieses einen Transistors in Durchlaßrichtung gepolte Diode eingefügt;

f) im Kollektorkreis des genannten weiteren Transistors liegt das genannte Relais;

g) dem Kondensator des Integriegliedes ist ein von der Überwachungsschaltung aktivierbarer Entladestromkreis parallelgeschaltet.

Die Erfindung bringt den Vorteil mit sich, daß mit einem insgesamt geringen schaltungstechnischen Aufwand erreicht ist, daß bei mit unterschiedlichen Pegeln auftretendem Anschaltsignal stets eine vorgegebene Zeitspanne nach Auftreten eines solchen Anschaltsignals der Modem an die Fernsprechleitung angeschaltet wird, vorausgesetzt allerdings, daß nicht der zugehörige Fernsprechapparat bereits mit der Fernsprechleitung verbunden ist. Von Vorteil ist weiterhin, daß der an die Fernsprechleitung nach der betreffenden Zeitspanne angeschaltete Modem an dieser Fernsprechleitung auch angeschaltet bleibt, wenn sich der Pegel des weiterhin auftretenden Anschaltsignals ändert, d. h. insbesondere kleiner wird als zu dem Zeitpunkt, zu dem die Anschaltung des Modems an die Fernsprechleitung erfolgt ist. Damit wird also insgesamt ein sicherer Betrieb hinsichtlich des Anschaltens des Modems an die Fernsprechleitung erreicht. Schließlich ist von Vorteil, daß das erwähnte Belegungssignal unmittelbar auf das zeitbestimmende Integrierglied des Zeitgliedes einwirken kann, um dieses noch unwirksam zu machen, so lange der Modem noch nicht an die Fernsprechleitung angeschlosen ist.

Vorzugsweise ist durch den Schalter ggf. über einen noch weiteren Transistor an eine zur Übertragung von Datensignalen zu dem Endgerät dienende Leitung bei Auftreten des Belegungssignals ein Dauersignal abgebbar. Hierdurch ergibt sich der Vorteil, daß der betreffende Schalter für die Abgabe eines die Nichtbelegbarkeit der Fernsprechleitung durch das Endgerät anzeigenden Signals mitausgenutzt werden kann, was vom Schaltungsaufwand her besonders günstig ist.

Vorzugsweise ist der Schalter ein Kontakt eines Relais, welches im Stromkreis des Fernsprechapparates liegt. Hierdurch ergibt sich der Vorteil eines besonders geringen schaltungstechnischen Aufwands hinsichtlich der Realisierung des erwähnten Schalters und damit hinsichtlich der Beeinflussung des genannten Zeitgliedes.

Anhand einer Zeichnung wird die Erfindung nachstehend biespielsweise näher erläutert.

In der Zeichung ist ein Fernsprechapparat F angedeutet, der normalerweise an den beiden Adern einer Fernsprechleitung FL angeschaltet ist. In der betreffenden Verbindung liegt ein Umschaltkontakt u, der zu einem nachstehend noch zu betrachtenden Relais U gehört. Außerdem liegt in der betreffenden Verbindung ein Relais Ss, dem zwei antiparallel zueinander geschaltete Dioden D4, D5 und ein Kondensator C2 parallel liegen. Diese Anordnung entspricht damit völlig der Verbindungsanordnung, über die der Fernsprechapparat bei der eingangs betrachteten bekannten Schaltungsanordnung an einer Fernsprechleitung angeschlossen ist. An dieser Stelle sei noch angemerkt, daß das Relais Ss dann erregt ist, wenn der Fernsprechapparat F wirksam mit der Fernsprechleitung FL verbunden ist, was bei einer normalen Fernsprechverbindung der Fall ist.

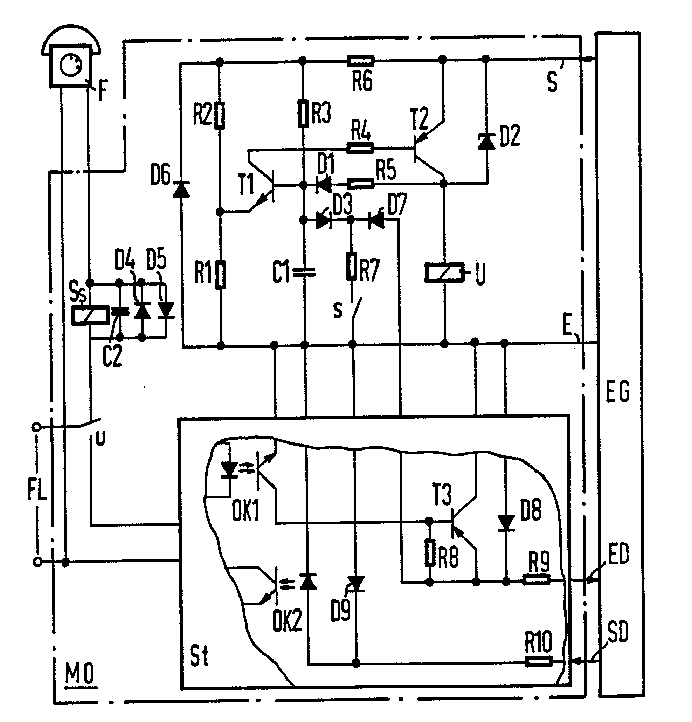

Neben dem Fernsprechapparat F ist in der Zeichnung ein Endgerät EG angedeutet, bei dem es sich um ein Datenabgabe-/Datenaufnahmegerät handeln mag, welches beispielsweise Datensignale mit 1200 bit/s abzugeben bzw. aufzunehmen vermag. Dieses Endgerät EG ist mit einer Reihe von noch näher zu betrachtenden Eingängen und Ausgängen mit einem Modem MO verbunden, welches über den bereits erwähnten Umschaltkontakt u mit der Fernsprechleitung FL verbindbar ist. Der Modem MO ist dann mit der Fernsprechleitung FL wirksam verbunden, wenn der Umschaltkontakt u seine andere, in der Zeichnung nicht dargestellte Schalterstellung einnimmt.

Zu dem Modem MO gehören ein im oberen Teil der Zeichnung dargestelltes Zeitglied und eine im unteren Teil der Zeichnung angedeutete Steuerschaltung St.

Das Zeitglied ist über eine mit S bezeichnete Anschaltsignal-Leitung und über eine mit E bezeichnete Erdungs-bzw. Rückführleitung mit dem Endgerät EG verbunden. Zwischen diesen beiden Leitungen S und E tritt das obenerwähnte Anschaltsignal auf, welches von dem Endgerät EG dann abgegeben wird, wenn dieses Endgerät EG über den Modem MO eine Verbindung mit der Fernsprechleitung FL herzustellen versucht. Das erwähnte Anschaltsignal kann dabei mit einem Pegel zwischen 4V und 7V auftreten.

Die Steuerschaltung St ist mit dem Endgerät EG über eine Sendedaten führende Sendedatenleitung SD, über eine Empfangsdaten führende Empfangsdatenleitung ED und über die bereits erwähnte Erdungsleitung E verbunden.

Das im oberen Teil der Zeichnung dargestellte Zeitglied enthält ein aus einem Kondensator C1 und einem dazu in Reihe liegenden Widerstand R3 bestehendes Intergrierglied sowie einen Widerstands-Spannungsteiler, bestehend aus den Widerständen R1 und R2. Das erwähnte Integrierglied und der erwähnte Widerstands-Spannungsteiler sind mit den äußeren Enden direkt miteinander verbunden. Über einen Schutzwiderstand R6 werden somit das Integrierglied und der Widerstands-Spannungsteiler gemeinsam mit dem vom Endgerät EG abgebbaren Anschaltsignal beaufschlagt.

Mit dem Verbindungspunkt zwischen dem Widerstand R3 und dem Kondensator C1 des zuvor erwähnten Integriergliedes ist die Basis eines Transistors T1 verbunden, der vom npn-Leitfähigkeitstyp ist. Dieser Transistor ist mit seinem Emitter am Verbindungspunkt der den Widerstands-Spannungsteiler bildenden Widerstände R1 und R2 angeschlossen. Der betreffende Transistor T1 wirkt damit als Vergleicher, der die am Kondensator C1 jeweils liegende Spannung mit der am Verbindungspunkt der beiden Widerstände R1, R2 vorhandenen Spannung vergleicht. Ist im vorliegenden Fall die am Kondensator C1 liegende Spannung um den Basis-Emitter-Spannungsabfall von etwa 0,7 V des Transistors T1 höher (positiv) als die am Verbindungspunkt der beiden Widerstände R1, R2 liegende Spannung, so gelangt der Transistor T1 aus seinem normalerweise nichtleitenden Zustand in den leitenden Zustand.

Der Transistor T1 ist im vorliegenden Fall mit seinem Kollektor über einen Schutzwiderstand R4 mit der Basis eines weiteren Transistors T2 verbunden, der vom pnp-Leitfähigkeitstyp ist. Dieser Transistor T2 liegt mit seinem Emitter an der Anschaltsignal-Leitung S. Der Kollektor des

Transistors T2 ist über einen Widerstand R5 und eine Diode D1 mit der Basis der Transistors T1 verbunden. Außerdem ist der Kollektor des Transistors T2 über das oben bereits erwähnte Relais U mit der Leitung E verbunden. Bezüglich der Diode D1 sei noch angemerkt, daß diese so gepolt ist, daß der über den Widerstand R5 fließende Teil des Kollektorstroms des Transistors T2 in die Basis des Transistors T1 zu fließen vermag. Nachdem der Basisstrom für den Transistor T2 lediglich durch den Kollektorstrom des Transistors T1 gebildet ist, stellt die zuvor erläuterte, die beiden Transistoren T1 und T2 umfassende Schaltungsanordnung eine Selbsthalteschaltung dar. Befinden sich bei dieser Selbsthalteschaltung die beiden Transistoren T1 und T2 zunächst im nichtleitenden Zustand und wird anschließend der Transistor T1 in den leitenden Zustand überführt - und zwar dadurch, daß die Basisspannung des Transistors T1 um 0,7V höher ist als die Emitterspannung des Transistors T1 - so wird auch der Transistor T2 leitend. Dies hat aber zur Folge, daß der Transistor T7 noch stärker leitend gesteuert wird. In diesem Zustand verbleibt die betreffende Schaltung auch dann, wenn sich der Pegel des Anschaltsignals (S) anschließend erniedrigt. Die betreffende Schaltung ist lediglich dadurch in ihren Ausgangszustand sicher zurückführbar, daß das Anschaltsignal (S) völlig abgeschaltet wird.

Bezüglich des vorstehend erwähnten Zeitgliedes sei noch angemerkt, daß dem zu dem betreffenden Zeitglied gehörenden Transistor T2 eine Zenerdiode D2 parallel geschaltet ist und daß dem obenerwähnten Integrierglied und dem ebenfalls erwähnten Widerstands-Spannungsteiler eine Diode D6 parallel geschaltet ist. Diese beiden Dioden D2 und D6 dienen dem Schutz des betreffenden Zeitgliedes vor Zerstörung durch mit falscher Polarität auftretendem Anschaltsignal (S). Die Zenerdiode dient außerdem dazu, den Transistor T2 vor induktiven Abschaltspannungsspitzen vom Relais U her zu schützen.

Im Hinblick auf das zuvor erläuterte Zeitglied sei noch angemerkt, daß dieses aufgrund des gewählten Schaltungsaufbaus stets nach einer vorgegebenen festgelegten Zeitspanne auf das Auftreten eines Anschaltsignals (S) hin das Relais U erregt. Irgendwelche Schwankungen oder unterschiedliche Pegel in dem betreffenden Anschaltsignal (S), welches mit einem Pegel zwischen 4V und 7V auftreten mag, wirken sich auf die betreffende Zeitspanne nicht aus, da nämlich sowohl das Integrierglied als auch der erwähnte Widerstands-Spannungsteiler gemeinsam durch das betreffende Anschaltsignal beaufschlagt werden und da der als Vergleicher wirkende Transistor T1 von diesen beiden Schaltungsteilen her gesteuert wird.

Dem Kondensator C1 des Integriergliedes ist eine Reihenschaltung parallel geschaltet, die aus einer Diode D3, einem Widerstand R7 und einem Schalter s besteht, der durch den Kontakt des oben bereits erwähnten Relais Ss gebildet ist. Der betreffende Kontakt s ist dann geschlossen, wenn das Relais Ss erregt ist. Dieses Relais Ss ist dann erregt, wenn der Fernsprechapparat F wirksam mit der Fernsprechleitung FL verbunden ist. Die zu dem Relais Ss parallel liegenden Dioden D4 und D5 schützen das Relais Ss dabei vor einer Überlastung. Der Kondensator C2 verkleinert die Einfügungsdämpfung der betreffenden Parallelschaltung, bestehend aus den Relais Ss und den Dioden D4, D5.

Bei geschlossenem Schalter bzw. Kontakt s ist somit ein Entladekreis für den Kondensator C1 geschaffen. In diesem Entladekreis entlädt sich der Kondensator C1, wenn er zuvor durch das Anschaltsignal (S) aufgeladen worden ist und das Relais U noch nicht erregt worden ist. Die Nichterregung des Relais U ist dabei im übrigen Voraussetzung dafür, daß das Relais Ss erregt werden kann. Ist nämlich einmal das Relais U erregt, so ist der zugehörige Umschaltkontakt u in seine in der Zeichnung nicht dargestellte Schalterstellung umgesteuert, in der dann der Modem MO mit der Fernsprechleitung FL wirksam verbunden ist und in der das Relais Ss nicht mehr erregt werden kann.

Mit dem zuvor betrachteten Schalter bzw. Kontakt s, der gewissermaßen ein durch ein Belegungssignal - von dem Fernsprechapparat F her - betätigbarer Schalter ist, ist im vorliegenden Fall über den Widerstand R7 und eine der Entkopplung dienende Diode D7 sowie über einen Widerstand R9 mit der Empfangsdatenleitung ED des Endgerätes EG verbunden. Die Diode D7 kann aber auch direkt mit dem Kontakt bzw. mit der Basis eines zu der Steuerschaltung St gehörenden Transistors T3 verbunden sein, der vom pnp-Leitfähigkeitstyp ist. Der Kollektor des Transistors T3 ist mit der Erdungsleitung E verbunden. Der Emitter des Transistors T3 ist über den Widerstand R9 mit der genannten Empfangsdatenleitung ED verbunden. Der Emitter-Kollektor-Strecke des Transistors T3 liegt eine Diode D8 parallel, die als sogenannter Verpolungsschutz dient und die den Transistor T3 vor der Zerstörung durch mit falscher Polarität auftretenden Spannungen schützt.

Die Basis und der Emitter des Transistors T3 sind im überigen durch einen Widerstand R8 miteinander verbunden. Außderdem ist mit der Basis des Transistors T3 der Transistor eines Optokopplers Ok1 verbunden, dessen Transistor im übrigen mit der Erdungsleitung E verbunden sein kann. Die zu dem Optokoppler Ok1 gehörende Leuchtdiode wird mit der Fernsprechleitung FL wirksam verbunden sein, wenn der Modem MO mit dieser Fernsprechleitung verbunden ist.

Ist der vorstehend erwähnte Schalter bzw. Kontakt s geschlossen, so liegt im vorliegenden Fall direkt und bei Ansteuerung des Transistors T3 durch den betreffenden Schalter bzw. Kontakt an der Empfangsdatenleitung ED ein Dauerlagesignal, welches in dem Endgerät EG als Signal dafür gewertet wird, daß der Modem MO von dem Endgerät EG her gerade nicht belegt werden kann.

Zu der Steuerschaltung St gehört neben den zuvor betrachteten Elementen noch ein Optokoppler Ok2, dessen Leuchtdiode über einen Schutzwiderstand R10 mit der Sendedatenleitung SD des Endgeräts EG und mit der Erdungsleitung E verbunden ist. Der betreffenden Leuchtdiode liegt im übrigen eine dem Verpolungsschutz dienende Diode D9 parallel. Die Kollektor-Emitter-Strecke des zu dem Optokoppler Ok2 gehörenden Transistors kann mit der Fernsprechleitung FL verbunden sein, wenn der Modem MO mit dieser Fernsprechleitung verbunden ist.

Abschließend sei noch angemerkt, daß der Transistor T1 in Anweichung von den erläuterten Verhältnissen mit seinem Emitter an dem Integrierglied und mit seiner Basis an dem Widerstands-Spannungsteiler angeschlossen sein könnte.

**Patentansprüche**

1. Schaltungsanordnung zum Anschalten eines Modems (MO) an eine Fernsprechleitung (FL), die normalerweise mit einem Fernsprechapparat (F) verbunden ist und die nach dem Auftreten eines in einem Endgerät (EG) erzeugten Anschaltsignals unter Verwendung eines Relais (U) vom Fernsprechapparat (F) getrennt und mit dem Modem (MO) verbunden wird, umfassend folgende Merkmale:

a) es ist eine Überwachungsschaltung (Ss) vorgesehen, die ein Belegungssignal an das Endgerät (EG) abgibt, wenn der Fernsprechapparat (F) belegt ist;

b) es ist ein Zeitglied vorgesehen, dem das vom Endgerät (EG) erzeugte Anschaltesignal und ein dem Belegungssignal zugeordnetes Steuersignal zugeführt werden und das eine vorgegebene Zeitdauer nach dem Autreten des Anschaltesignals ein das Relais (U) erregendes Signal abgibt, während das Auftreten des Steuersignals zur Sperrung des Zeitgliedes führt;

c) das Zeitglied ist durch ein aus der Reihenschaltung eines Widerstandes (R3) und eines Kondensators (C1) bestehendes Integrierglied und einen Widerstands-Spannungsteiler (R1, R2) gebildet, der in Parallelschaltung mit dem Integrierglied (R3, C1) an einer Anschaltsignal-Leitung (S) und einer Erdungs-/Rückführungsleitung (E) des Endgerätes (EG) liegt;

d) ein Abgriff des Widerstands-Spannungsteilers (R1, R2) ist mit dem Emitter bzw. der Basis eines Transistors (T1) verbunden, dessen Basis bzw. Emitter mit dem Verbindungspunkt des Widerstands (R3) und des Kondensators (C1) des Integriergliedes (R3, C1) verbunden ist und dessen Kollektor und Basis außerdem mit einem weiteren Transistor (T2) unter Bildung einer Selbsthalteschaltung verbunden sind;

e) in die Verbindung des Kollektors des weiteren Transistors (T2) mit der Basis des genannten einen Transistors (T1) ist eine für einen Basisstrom dieses einen Transistors (T1) in Durchlaßrichtung gepolte Diode (D1) eingefügt;

f) im Kollektorkreis des genannten weiteren Transistors (T2) liegt das genannte Relais (U);

g) dem Kondensator (C1) des Integriergliedes ist ein von der Überwachungsschaltung (Ss) aktivierbarer Entladestromkreis (D3, R7, s) parallelgeschaltet.

2. Schaltungsanordnung nach Anspruch 1, dadurch gekennzeichnet, daß durch den Schalter (s) ggf. über einen noch weiteren Transistor (T3) an eine zur Übertragung von Datensignalen zu dem Endgerät (EG) dienende Leitung (ED) bei Auftreten des Belegungssignals ein Dauersignal abgebbar ist.

3. Schaltungsanordnung nach Anspruch 1 oder 2, dadurch gekennzeichnet, daß der Schalter (s) ein Kontakt (s) eines Relais (Ss) ist, welches im Stromkreis des Fernsprechapparates (F) liegt.

**Claims**

1. A circuit arrangement for connecting a modem (MO) to a telephone line (FL) which is normally connected to a telephone apparatus (F) and which is cut off from the telephone apparatus (F) and connected to the modem (MO) following the occurrence of a connect signal generated in a terminal (EG) using a relay (U), comprising the following features:

a) a monitoring circuit (Fs) is provided which emits a holding signal to the terminal (EG) when the telephone apparatus (F) is busy;

b) a timer is provided which is supplied with the connect signal generated by the terminal (EG) and with a control signal assigned to the holding signal and which, at a predetermined interval of time following the occurrence signal, emits a signal which excites the relay (U), whilst the occurrence of the control signal leads to the blockage of the timer;

c) the timer is formed by an integrator, composed of the series arrangement of a resistor (R3) and a capacitor (C1), and a resistor-voltage divider (R1, R2) which is connected to a connect signal line (S) in parallel with the integrator (R3, C1) and an earthing/feedback line (E) of the terminal (EG);

d) a terminal of the resistor-voltage divider (R1, R2) is connected to the emitter or base, as the case may be, of a transistor (T1) whose base or emitter is connected to the junction point of the resistor (R3) and the capacitor (C1) of the integrator (R3, C1) and whose collector and base are also connected to a further transistor (T2) forming a self-hold circuit;

e) a diode (D1), poled in the conducting direction for a base current of the aforementioned first transistor (T1) is interposed into the connection between the collector of the further transistor (T2) and the base of this first transistor (T1);

f) the aforementioned relay (U) is arranged in the collector circuit of the aforesaid further transistor (T2); and

g) the capacitor (C1) of the integrator is connected in parallel with a discharge circuit (D3, R7, s) which can be activated by the monitoring circuit (Ss).

2. A circuit arrangement as claimed in Claim 1, characterised in that, on the occurrence of the holding signal, a continuous signal can be emitted by the switch (s) via a further transistor (T3) to a line (ED) which serves to transmit data signals to the terminal (EG), where appropriate.

3. A circuit arrangement as claimed in Claim 1 or 2, characterised in that the switch (s) is a contact (s) of a relay (Ss) arranged in the circuit of the telephone apparatus (F).

**Revendications**

1. Circuit pour connecter un modem (MO) à une ligne téléphonique (FL), qui normalement est reliée à un combiné téléphonique (F) et qui après l'apparition d'un signal de connexion produit dans un terminal (EG), est séparée du combiné téléphonique (F) avec utilisation d'un relais (U), et est reliée au modem (MO), qui comporte les caractéristiques suivantes:

a) on prévoit un circuit de surveillance (Ss) qui délivre un signal d'occupation au terminal (EG), lorsque le combiné téléphonique (F) est occupé;

b) on prévoit une unité de retard, qui est attaquée par le signal de connexion produit par le terminal (EG) et par un signal de commande associé au signal d'occupation, et qui délivre, à un intervalle de temps prédéfini après l'apparition du signal de connexion, un signal d'excitation du relais (U), alors que l'apparition du signal de commande entraîne le blocage de l'unité de retard;

c) l'unité de retard se compose d'un élément intégré constitué du circuit-série d'une résistance (R3) et d'un condensateur (C1), et d'un diviseur de tension à résistances (R1, R2), qui est monté en parallèle sur l'élément intégré (R3, C1) entre un conducteur du signal de connexion (S) et un conducteur de masse/de retour (E) du terminal (EG);

d) une borne du diviseur de tension à résistances (R1, R2) est reliée à l'émetteur, ou à la base, d'un premier transistor (T1), dont la base, ou l'émetteur, est reliée au point de liaison de la résistance (R3) et du condensateur (C1) de l'élément intégré (R3, C1), et dont le collecteur et la base sont de plus reliés à un second transistor (T2) sous la forme d'un circuit à auto-maintien;

e) dans la liaison du collecteur du second transistor (T2) avec la base dudit premier transistor (T1), est montée une diode (D1) destinée à un courant de base de ce premier transistor (T1) et polarisée dans le sens passant;

f) dans le circuit de collecteur dudit second transistor (T2) se trouve ledit relais (U); et

g) un circuit de courant de décharge (D3, R7, s) pouvant être activé par le circuit de surveillance (Ss), est monté en parallèle sur le condensateur (C1) de l'élément intégré.

2. Circuit selon la revendication 1, caractérisé en ce qu'un signal permanent peut être délivré, dans le cas de l'apparition du signal d'occupation, par le commutateur (s), le cas échéant par l'intermédiaire d'un troisième transistor (T3), sur un conducteur (ED) servant à la transmission des signaux de données vers le terminal (EG).

3. Circuit selon la revendication 1 ou 2, caractérisé en ce que le commutateur (s) est un contact (s) d'un relais (Ss), qui se trouve dans le circuit du combiné téléphonique (F).